# EUROPEAN PATENT APPLICATION

(11) **EP 2 957 456 A1**
(43) Date of publication of application: **23.12.2015**
(21) Application number: 13874980.9
(22) Date of filing: 15.02.2013
(51) Int. Cl.: B60N 2/30, B60N 2/10

(54) **VEHICLE SEAT**

(71) Applicant: TS Tech Co., Ltd., Asaka-shi, Saitama 351-0012 (JP)
(72) Inventor: KIKUCHI, Masato, Shioya-gun Tochigi 329-1217 (JP); SHITANOKI, Kazuaki, Shioya-gun Tochigi 329-1217 (JP); TANAKA, Yuji, Shioya-gun Tochigi 329-1217 (JP)
(74) Representative: Grünecker Patent- und Rechtsanwälte PartG mbB
(86) International application number: PCT/JP2013/053755
(87) International publication number: WO 2014/125632

(57) **Abstract**

The present invention is to provide a vehicle seat in which a seat main body can be flipped up with a simple structure having high support rigidity. A vehicle seat S includes rail brackets 60 fixed to the vehicle body floor side, support bases 50 pivotably attached to right-left outer side surfaces of the rail brackets 60, and front support links 30 pivotably attached to right-left inner side surfaces of the rail brackets. About base pivot shaft portions 51 in front parts of the support bases 50, a seat back 2 and a seat cushion 1 are flipped up and rotated in the forward inclination direction. The front support links 30 are arranged on the rear side of the base pivot shaft portions 51, and maintain a forward inclination angle of the seat back 2 and the seat cushion 1.

## Description

### TECHNICAL FIELD

The present invention relates to a vehicle seat, and particularly relates to a vehicle seat in which a seat back and a seat cushion can be flipped up in the forward inclination direction with respect to a vehicle body floor.

### BACKGROUND ART

Conventionally, vehicle seats in which a seat back and a seat cushion are flipped up in the forward inclination direction with respect to a vehicle body floor and slidingly moved to the seat front side, and an incoming and outgoing space is formed on the seat rear side are already known. Among the vehicle seats, there is a vehicle seat in which a seat cushion can be stowed onto the vehicle body floor side in a state where a seat back is folded onto the side of the seat cushion in addition to the above flip-up mechanism (for example, refer to Patent Literature 1).

In a vehicle seat described in Patent Literature 1, a lower structure corresponding to a rail device is fixed to a vehicle body floor, and a central structure is pivotably coupled to this lower structure via a first four link mechanism. This central structure supports the seat, and a seat back and a seat cushion are respectively pivotably coupled to the central structure via a second four link mechanism.

In this vehicle seat, the seat back and the seat cushion can be flipped up and rotated in the forward inclination direction with respect to the vehicle body floor by the first four link mechanism, and retained at a predetermined forward inclination angle. In a state where the seat back is folded onto the side of the seat cushion, the seat cushion can be stowed onto the vehicle body floor side by the second four link mechanism.

### CITATION LIST

### PATENT DOCUMENT

Patent Document 1: Japanese Patent No. 4825219

### DISCLOSURE OF THE INVENTION

### Problem to be Solved by the Invention

However, the vehicle seat as in Patent Literature 1 can be moved from a seated position where a passenger can be seated to a flip-up position where the passenger can get on and off a portion on the rear side of the seat by flipping up the seat back and the seat cushion in the forward inclination direction, and can also be moved to a stowed position where the seat back and the seat cushion can be stowed. Nonetheless, a complicated link structure is required.

Therefore, a vehicle seat to be switchable from a seated position to a flip-up position or a stowed position with a simple structure is desired.

In a vehicle seat in which a seat main body can be flipped in the forward inclination direction, a link mechanism for flipping up the seat main body and supporting the seat main body from the lower side is required between the seat main body and a vehicle body floor. This link mechanism desirably has high support rigidity with respect to a load added at the time of seating on the seat. In the vehicle seat as in Patent Literature 1, the seat main body is supported by a plurality of link mechanisms. However, a vehicle seat with a simple link structure having high support rigidity with respect to a seat main body is desired.

The present invention is achieved in consideration of the above problems, and an object of the present invention is to provide a vehicle seat to be switchable from a seat seated position to a seat flip-up position or a seat stowed position with a simple structure.

Another object of the present invention is to provide a vehicle seat with a simple structure having high support rigidity.

### Means for Solving Problem

The above problems are solved by a vehicle seat of the present invention, the vehicle seat movable from a seated position for a passenger to be seated to a flip-up position for the passenger to get on and off a portion on the rear side of the seat by flipping up a seat back and a seat cushion coupled to the seat back in the forward inclination direction with respect to a vehicle body floor, the vehicle seat including an attachment member to be attached to the vehicle body floor side, a support base pivotably coupled to the attachment member, the support base supporting the seat back, and a support link pivotably coupled to the attachment member, the support link pivotably supporting the seat cushion, wherein the support base includes a base pivot shaft portion provided in a front portion of the support base and axially supported on the attachment member in the seat width direction, and is rotatable to move the seat back and the seat cushion to the flip-up position about the base pivot shaft portion with respect to the attachment member, and the attachment member is arranged between the support base and the support link in the seat width direction.

In such a way, the attachment member to be attached to the vehicle body floor side is arranged between the support base supporting the seat back and the support link supporting the seat cushion in the seat width direction. Thus, by attaching the support base and the support link to sandwich the attachment member, support rigidity of the support base and the support link is improved.

Therefore, the vehicle seat to be switchable from the seat seated position to the seat flip-up position with a simple structure where the support base and the support link are arranged at positions to sandwich the attachment member on the vehicle body floor side in the seat width direction, the vehicle seat in which support rigidity with respect to a load added at the time of seating on the seat is enhanced can be provided.

At this time, in the attachment member, the support base may be coupled to an outer side surface of the attachment member in the seat width direction, and the support link may be coupled to an inner side surface of the attachment member.

Due to such a configuration, with a simple structure where the support base is coupled to the outer side surface of the attachment member on the vehicle body floor side and the support link is coupled to the inner side surface of the attachment member, the support rigidity of the seat with respect to the load added at the time of seating on the seat can be enhanced.

At this time, the pair of support links may be provided on the right and left sides of the seat cushion, and respectively inclined downward on the outer sides in the seat width direction.

Due to such a configuration, the pair of support links supporting the seat cushion has for example a substantially inverted V form when seen from the seat front surface side. Thus, the support rigidity of the support links with respect to a downward load added at the time of seating on the seat can be enhanced.

At this time, a link coupling member coupling the pair of support links may be provided, both right and left end portions of the link coupling member may be inclined downward on the outer sides in the seat width direction, and the inclined parts of the link coupling member and the inclined parts of the support links may be coupled to each other.

Since the inclined parts of the link coupling member and the inclined parts of the support links are coupled to each other in such a way, the support rigidity of the support links with respect to the downward load added at the time of seating on the seat can be furthermore enhanced.

At this time, a vertically-sectional shape of the link coupling member may be a shape elongated in the up and down direction at the seated position.

Due to such a configuration, the support rigidity of the support links can be furthermore enhanced.

At this time, the base pivot shaft portion of the support base may be sandwiched by the attachment member in the seat width direction.

Due to such a configuration, the support rigidity of the support base to be pivoted about the base pivot shaft portion is enhanced, and a pivot action of the support base is stabilized in the seat width direction.

At this time, a rail device having a lower rail fixed to the vehicle body floor, and an upper rail supported relatively movably with respect to the lower rail may be provided, the attachment member may be a rail bracket attached to an upper surface of the upper rail, and in the rail device, the upper rail may be relatively moved forward with respect to the lower rail in conjunction with pivot of the support base at the time of moving to the flip-up position.

In such a way, in the rail device, the upper rail is relatively moved forward with respect to the lower rail at the time of moving to the flip-up position. Thus, a large incoming and outgoing space on the seat rear side can be ensured at the seat flip-up position with a simple structure.

At this time, a reclining device pivotably coupling the seat back with respect to the support base may be provided, and the support links may be rotatable to move the seat cushion to a stowed position on the vehicle body floor side about the lower end portions with respect to the attachment member in a state where the seat back is folded onto the side of the seat cushion by the reclining device.

Due to such a configuration, with a simple structure of the support base supporting the seat back and the support links supporting the seat cushion, the vehicle seat to be switchable from the seat seated position to the seat stowed position can be provided.

At this time, the pair of rail brackets may be provided on the right and left sides of the seat, the vehicle seat may include a rail coupling member coupling the pair of right and left rail brackets, and the link coupling member may be arranged on the front side of the rail coupling member at the stowed position.

Due to such a configuration, when the seat is moved from the seated position to the stowed position, the link coupling member is rotated while avoiding contact with the rail coupling member, and arranged in a free space in a portion on the front side of the rail coupling member at the stowed position. Thus, compact arrangement can be realized.

### ADVANTAGEOUS EFFECTS OF INVENTION

According to the invention of an embodiment, the attachment member to be attached to the vehicle body floor side is arranged between the support base supporting the seat back and the support link supporting the seat cushion in the seat width direction. Thus, by attaching the support base and the support link to sandwich the attachment member, the support rigidity of the support base and the support link is improved.

Therefore, the vehicle seat to be switchable from the seat seated position to the seat flip-up position with the simple structure where the support base and the support link are arranged at the positions to sandwich the attachment member on the vehicle body floor side in the seat width direction, the vehicle seat in which the support rigidity with respect to the load added at the time of seating on the seat is enhanced can be provided.

According to the invention of an embodiment, with the simple structure where the support base is coupled to the outer side surface of the attachment member on the vehicle body floor side and the support link is coupled to the inner side surface of the attachment member, the support rigidity of the seat with respect to the load added at the time of seating on the seat can be enhanced.

According to the invention of an embodiment, the pair of support links supporting the seat cushion has for example a substantially inverted V form when seen from the seat front surface side. Thus, the support rigidity of the support links with respect to the downward load added at the time of seating on the seat can be enhanced.

According to the invention of an embodiment, since the inclined parts of the link coupling member and the inclined parts of the support links are coupled to each other, the support rigidity of the support links with respect to the downward load added at the time of seating on the seat can be furthermore enhanced.

According to the invention of an embodiment, the support rigidity of the support links can be furthermore enhanced.

According to the invention of claim 6, the support rigidity of the support base to be pivoted about the base pivot shaft portion is enhanced, and the pivot action of the support base is stabilized in the seat width direction.

According to the invention of claim 7, in the rail device, the upper rail is relatively moved forward with respect to the lower rail at the time of moving to the flip-up position. Thus, the large incoming and outgoing space on the seat rear side can be ensured at the seat flip-up position with the simple structure.

According to the invention of claim 8, with the simple structure of the support base supporting the seat back and the support links supporting the seat cushion, the vehicle seat to be switchable from the seat seated position to the seat stowed position can be provided.

According to the invention of claim 9, when the seat is moved from the seated position to the stowed position, the link coupling member is rotated while avoiding contact with the rail coupling member, and arranged in the free space in the portion on the front side of the rail coupling member at the stowed position. Thus, the compact arrangement can be realized.

### BRIEF DESCRIPTION OF DRAWINGS

FIG. 1 is a schematic perspective view of a vehicle seat according to the present invention, the view showing a cushion frame portion of which serves as a framework, front support links, rear support links, and support bases.
FIG. 2 is a partially enlarged view of the vehicle seat of FIG. 1.
FIG. 3 is a partially enlarged view in which the vehicle seat of FIG. 1 is seen from a different angle.
FIG. 4 is a schematic side view showing the vehicle seat of FIG. 1: FIG. 4(a) is a view showing a state of a seated position; and FIG. 4 (b) is a view showing a state of a flip-up position.
FIG. 5 is a schematic side view showing the vehicle seat of FIG. 1: FIG. 5(a) is a view showing a state of the seated position; and FIG. 5(b) is a view showing a state of a stowed position.

### DETAILED DESCRIPTION OF THE INVENTION

The present embodiment relates to the invention of a vehicle seat to be switchable from a seated position to a flip-up position or a stowed position, in which support bases are attached to right-left outer side surfaces of rail brackets fixed on the vehicle body floor side, front support links are attached to right-left inner side surfaces, the support bases flip up and rotate a seat main body in the forward inclination direction about base pivot shaft portions of front parts thereof, and the front support links maintain a forward inclination angle of the seat main body.

It should be noted that the side where a passenger is seated with respect to a seat back of the vehicle seat is the seat front side.

A vehicle seat S of the present embodiment is arranged for example as a second row seat in a vehicle provided with three rows of seats in the vehicle front to back direction.

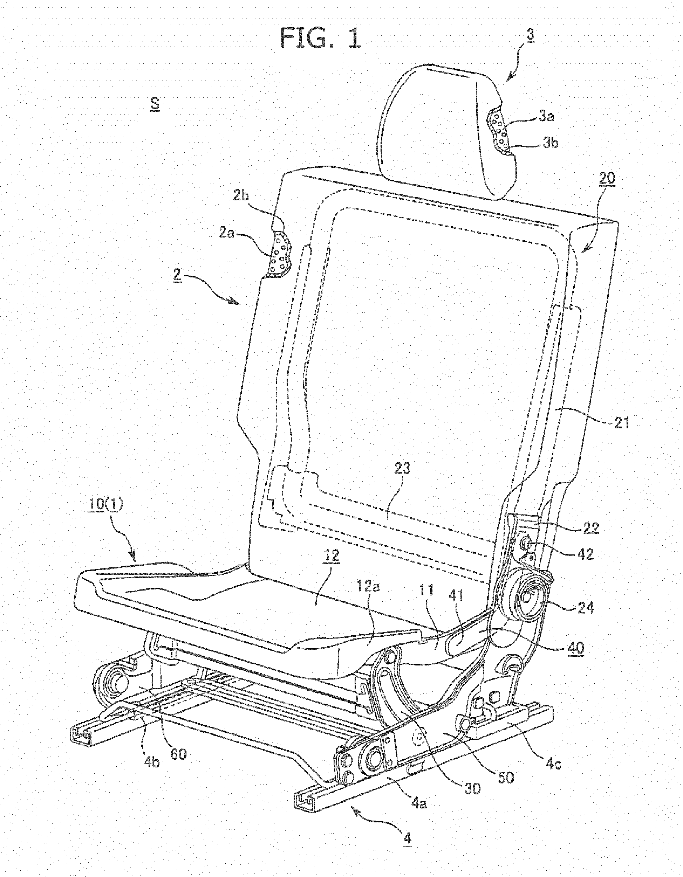

As shown in FIG. 1, the vehicle seat S mainly includes a seat main body provided with a seat cushion 1, a seat back 2, and a headrest 3, right and left rail devices 4 for attaching the seat main body to a vehicle body floor in a state where the seat main body is movable in the front to back direction, right and left front support links 30 respectively attached between the seat main body and the rail devices 4, the front support links coupling and supporting the seat cushion 1, right and left support baes 50 coupling and supporting the seat back 2, and right and left rear support links 40 attached between the seat cushion 1 and the seat back 2.

The seat cushion 1 is a seated portion supporting the passenger from the lower side, and is formed by mounting a cushion pad (not shown) onto a cushion frame 10 serving as a framework and covering with a skin (not shown) over the cushion pad.

The seat back 2 is a backrest portion supporting the back of the passenger from the rear side, and is formed by mounting a cushion pad 2a onto a back frame 20 serving as a framework and covering with a skin 2b.

The headrest 3 is a head portion supporting the head of the passenger from the rear side, and is formed by mounting a cushion pad 3a onto pillars (not shown) serving as core materials and covering with a skin 3b.

The rail devices 4 are arranged between the seat main body side and the vehicle body floor in the up and down direction, and as shown in FIG. 1, mainly include right and left lower rails 4a fixed to the vehicle body floor, right and left upper rails 4b supported relatively movably with respect to the lower rails 4a, right and left strikers 4c fixed to rear parts of the lower rails 4a and the upper rails 4b, and right and left rail brackets 60 fixed to front parts on upper surfaces of the upper rails 4b.

The rail brackets 60 correspond to an attachment member of the embodiments.

It should be noted that a lock member (not shown) that immovably locks the upper rails 4b, and an operation lever (not shown) that cancels a locked state of the lock member are attached to the rail devices 4.

The cushion frame 10 is formed by a substantially rectangular frame body serving as a framework of the seat cushion 1, and as shown in FIG. 1, mainly includes cushion side frames 11 arranged on the right and left sides, and a pan frame 12 bridged on upper surfaces of the cushion side frames 11, the pan frame serving as a plate shaped frame.

It should be noted that an elastic member (not shown) or a frame coupling pipe (not shown) coupling right-left inner side surfaces on the rear side of the cushion side frames 11 may be separately provided.

The cushion side frames 11 are formed by sheet metal members extending in the front to back direction, and the cushion side frames 11 are separated from each other in the right and left direction.

The pan frame 12 is formed by a metal frame supporting the thighs of the passenger, and formed in a substantially rectangular shape having a substantially flat upper surface. The pan frame 12 has a bent portion 12a in a front end portion and both right and left end portions, and the bent portion 12a is retained onto the upper surfaces of the cushion side frames 11.

Upper end portions of the front support links 30 are pivotably coupled to center parts on right-left outer side surfaces of the cushion side frames 11, and front end portions of the rear support links 40 are coupled to parts on the rear side of the center parts.

The seat cushion 1 with the cushion frame 10 as a framework can be moved between the seated position where the passenger is seated and the stowed position where the seat main body is stowed by pivot of the front support links 30 and the rear support links 40. In detail, the seat cushion 1 is movable about lower end portions of the front support links 30, and when moved to the stowed position, the seat cushion is moved downward in the front oblique direction with respect to the vehicle body floor side.

The back frame 20 is formed by a substantially rectangular frame body serving as a framework of the seat back 2, and as shown in FIG. 1, includes right and left back side frames 21 arranged on the right and left sides, and attachment brackets 22 attached to lower parts on right-left outer side surfaces of the back side frames 21 as constituent parts.

It should be noted that a lower frame 23 is bridged over inner side surfaces of the back side frames 21.

Rear end portions of the rear support links 40 are pivotably coupled to the lower parts on the right-left outer side surfaces of the back side frames 21. Each of the rear support links 40 is arranged and sandwiched between the back side frame 21 and the attachment bracket 22 in the right and left direction.

Each of the attachment brackets 22 is formed in a substantially L shape and arranged and separated from the back side frame 21 with a predetermined gap in the right and left direction. Reclining devices 24 pivotably coupling the back frame 20 to the support bases 50 are attached to right-left outer side surfaces of the attachment brackets 22.

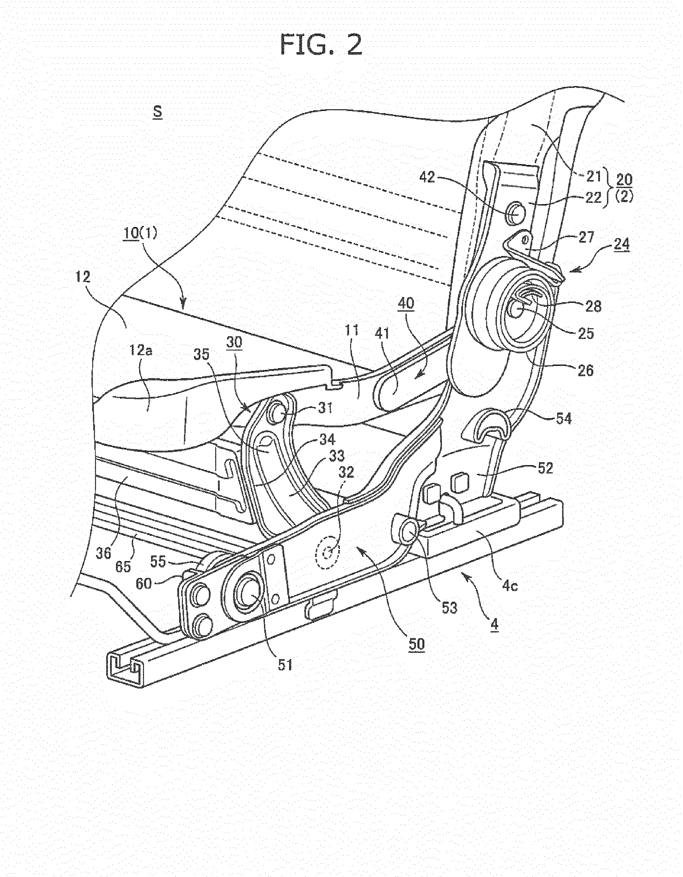

Each of the reclining devices 24 is formed by a known device, and as shown in FIG. 2, mainly includes a pivot shaft 25 of the reclining device 24, a spiral spring 26 that biases the back frame 20 in a standing state, a spring locking bracket 27 attached to the side of the back side frame 21, the spring locking bracket that locks one end portion of the spiral spring 26, and a spring locking portion 28 provided on the side of the support base 50, the spring locking portion that locks the other end portion of the spiral spring 26.

The reclining device 24 locks the seat back 2 in a standing state. By operating the operation lever (not shown), the lock is cancelled, and the seat back 2 is rotated to the front side with respect to the support base 50 to be folded onto the side of the seat cushion 1.

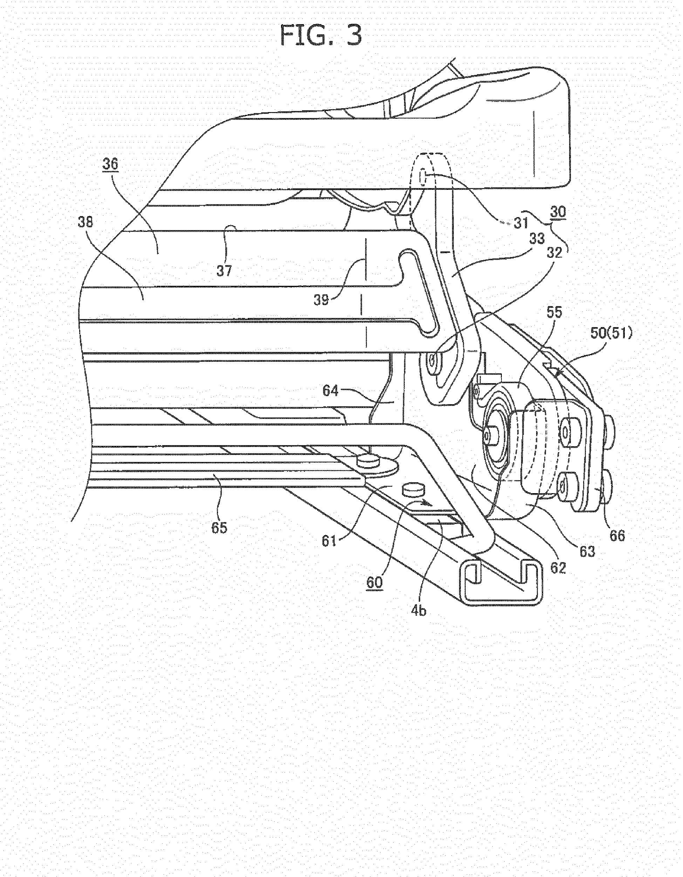

As shown in FIG. 2 or 3, each of the front support links 30 is formed by a sheet metal member extending in the up and down direction, and serves as a member pivotably supporting the seat cushion 1 from the lower side.

The front support link 30 is formed in a substantially arch shape when seen from the seat side surface side, and includes an upper end portion 31 coupled to a substantially center portion of the cushion frame 10 in the front to back direction, a lower end portion 32 coupled to a substantially rear portion of the rail bracket 60, and a link main body portion 33 expanded to the front side of the upper end portion 31 and the lower end portion 32.

As shown in FIG. 3, the front support link 30 is formed in a substantially crank shape when seen from the seat front surface side. In the right and left direction, a portion ranging from the upper end portion 31 to the link main body portion 33 is bent to the right-left outer side, and a portion ranging from the link main body portion 33 to the lower end portion 32 is bent to the right-left inner side. Therefore, the front support link 30 is compactly arranged while avoiding contact with a spring member 55 to be described later, and rigidity of the front support link 30 is improved.

As shown in FIG. 2, the upper end portion 31 is provided with a through hole (not shown) passing through in the seat right and left direction. By fastening a pivot bolt (not shown) to a right-left outer side surface of the cushion frame 10 via this through hole, the seat cushion 1 is pivotably coupled to the upper end portion 31.

The lower end portion 32 is similarly provided with a through hole (not shown). By fastening a pivot bolt (not shown) to a right-left inner side surface of the rail bracket via this through hole, the front support link 30 is pivotably coupled to the rail bracket 60.

As shown in FIG. 3, the link main body portion 33 is formed in a shape inclined downward to the right-left outer side, and the right and left link main body portions 33 are formed in a substantially inverted V form when seen from the seat front surface side.

As shown in FIG. 2, in the front support link 30, a flange portion 34 bent to the right-left outer side over the entire outer edge thereof, and a bead portion 35 formed by denting a right-left outer side surface inward from the lower end portion 32 to the link main body portion 33 are formed.

The bead portion 35 is formed to continue from a peripheral edge portion of the through hole (not shown) formed in the lower end portion 32 and extend in a center portion of the link main body portion 33 in the front to back direction.

Therefore, support rigidity of the front support link 30 with respect to a load added to the seat cushion 1 at the time of seating of the passenger is improved.

A link coupling member 36 coupling the right and left front support links 30 is provided on the right-left inner sides of the front support links 30.

The link coupling member 36 is a sheet metal member elongated in the right and left direction having a vertical section formed in a substantially U shape.

As shown in FIG. 3, both right and left end portions of the link coupling member 36 are inclined downward to the right-left outer sides, and formed in a substantially trapezoid form when seen from the seat front surface side.

Inclined parts corresponding to right-left outer side surfaces of the link coupling member 36 are abutted with and bonded to inclined parts corresponding to right-left inner side surfaces of the link main body portions 33 among the front support links 30.

A vertically-sectional shape of the link coupling member 36 is formed in a shape elongated in the up and down direction at the seated position.

In the link coupling member 36, a flange portion 37 bent to the rear side over the entire outer edge thereof, a bead portion 38 formed by denting in a substantially H shape from the front surface side to the rear side, and flange step portions 39 formed by recessing a center portion from the front surface side to the rear side with respect to both right and left end portions thereof are formed.

The bead portion 38 is formed in a bead shape elongated in the right and left direction. Right and left extending end portions of the bead portion 38 are inclined downward to the right-left outer sides along shapes of both the right and left end portions of the link coupling member 36.

Therefore, the support rigidity of the front support links 30 with respect to the load added to the seat cushion 1 at the time of seating of the passenger is improved.

Further in detail, each of the outer side surfaces of the link coupling member 36 is abutted with and bonded to an inner side surface of the link main body portion 33 and a portion sandwiched between the flange portion 34 and the bead portion 35.

Therefore, the support rigidity of the front support links 30 with respect to the load added to the seat cushion 1 at the time of seating of the passenger is furthermore improved.

As shown in FIG. 1 or 2, each of the rear support links 40 is formed by a sheet metal member formed in a substantially L shape extending in the front to back direction, and serves as a member supporting the seat cushion 1 from the rear side.

The rear support link 40 includes a front end portion 41 bonded to a rear portion on the right-left outer side surface of the cushion frame 10, and a rear end portion 42 coupled to the lower portion on the right-left outer side surface of the back side frame 21.

The rear end portion 42 is provided with a through hole (not shown) passing through in the seat right and left direction. By fastening a pivot bolt (not shown) to the right-left outer side surface of the back side frame 21 via this through hole, the rear support link 40 is pivotably coupled to the seat back 2.

In detail, the rear support link 40 is sandwiched between the back side frame 21 and the attachment bracket 22, and the pivot bolt is fastened from the right-left outer side surface of the attachment bracket 22. Therefore, an assembling property of the rear support link 40 is improved.

As shown in FIG. 2, each of the support bases 50 is formed by a sheet metal member extending in the front to back direction, and serves as a member supporting the seat back 2 from the lower side.

The support base 50 is formed in a substantially crank shape, bent to the right-left outer side from a rear portion to a front portion in the right and left direction, and compactly arranged while avoiding contact with the front support link 30.

It should be noted that flange portions (not shown) bent to the right-left outer side are formed in an upper end portion and a lower end portion of the support base 50, so that support rigidity of the support base 50 is enhanced.

The support base 50 includes a base pivot shaft portion 51 arranged in a front portion thereof, and a base engagement portion 52 arranged on the rear side of the base pivot shaft portion 51.

In the upper end portion and a rear portion of the support base 50, the reclining device 24 is arranged and coupled to a lower end portion of the back side frame 21.

A center base coupling member 53 and a rear side base coupling member 54 coupling the right and left support bases 50 to each other are provided on the right-left inner sides of the support bases 50.

The base pivot shaft portion 51 is a portion axially supported on a front portion of the rail bracket 60 by a pivot bolt (not shown) in the right and left direction. The support base 50 is coupled to the rail bracket 60 pivotably about the base pivot shaft portion 51.

The base engagement portion 52 is a portion disengageably coupled to the striker 4c of the rail device 4. At the seated position and the stowed position, the base engagement portion 52 and the striker 4c are engaged with each other.

As shown in FIG. 2 or 3, the spring member 55 serving as a bias member is arranged on the right-left inner side surface side of the base pivot shaft portion 51. The spring member 55 is formed by a known spiral spring, and biases the support base 50 to flip upward about the base pivot shaft portion 51 with respect to the rail bracket 60.

As shown in FIG. 2, the base pivot shaft portion 51 is arranged on the front side of the lower end portion 32 of the front support link 30. At the seated position and the stowed position, the lower end portion 32 is arranged in a substantially center portion in the front to back direction between the base pivot shaft portion 51 and the base engagement portion 52.

The base pivot shaft portion 51 is arranged at the substantially same height as the lower end portion 32 of the front support link 30. At the seated position and the stowed position, the base pivot shaft portion 51, the base engagement portion 52, and the lower end portion 32 are arranged at the substantially same height.

After the engagement between the base engagement portion 52 and the striker 4c is cancelled, the support base 50 is biased by the spring member 55, and rotated to flip up the seat back 2 and the seat cushion 1 in the forward inclination direction about the base pivot shaft portion 51.

When the support base 50 is rotated to flip up the seat back 2 and the seat cushion 1 to the flip-up position set with a predetermined forward inclination angle, the front support link 30 can retain the seat cushion 1 and the seat back 2 at this flip-up position.

As shown in FIG. 3, each of the rail brackets 60 is formed by a sheet metal member formed in a substantially L shape extending in the front to back direction, and serves as a member supporting the front support link 30 and the support base 50.

The rail bracket 60 includes a bottom wall portion 61 fixed to the upper surface of the upper rail 4b, an outer side wall portion 62 bent upward from a right-left outer side end portion of the bottom wall portion 61, and a front wall portion 63 and a rear wall portion 64 bent to the right-left inner sides from both front and rear end portions of the outer side wall portion 62.

A rail coupling member 65 coupling the right and left rail brackets 60 to each other is fixed to the upper surfaces of the bottom wall portions 61.

In the outer side wall portion 62, an outer side surface of a front portion thereof is pivotably coupled to the base pivot shaft portion 51 of the support base 50 shown in FIG. 2, and an inner side surface of a center portion thereof is pivotably coupled to the lower end portion 32 of the front support link 30.

The spring member 55 is attached to the inner side in the front portion of the outer side wall portion 62. The spring member 55 is arranged to face the base pivot shaft portion 51 in the right and left direction.

An attachment bracket 66 is fixed to a front surface of the front wall portion 63. In the rail bracket 60, the outer side wall portion 62 and the attachment bracket 66 are arranged to sandwich the support base 50 in the right and left direction.

A bead elongated in the right and left direction is formed in the rail coupling member 65, so that support rigidity of the rail bracket 60 is improved.

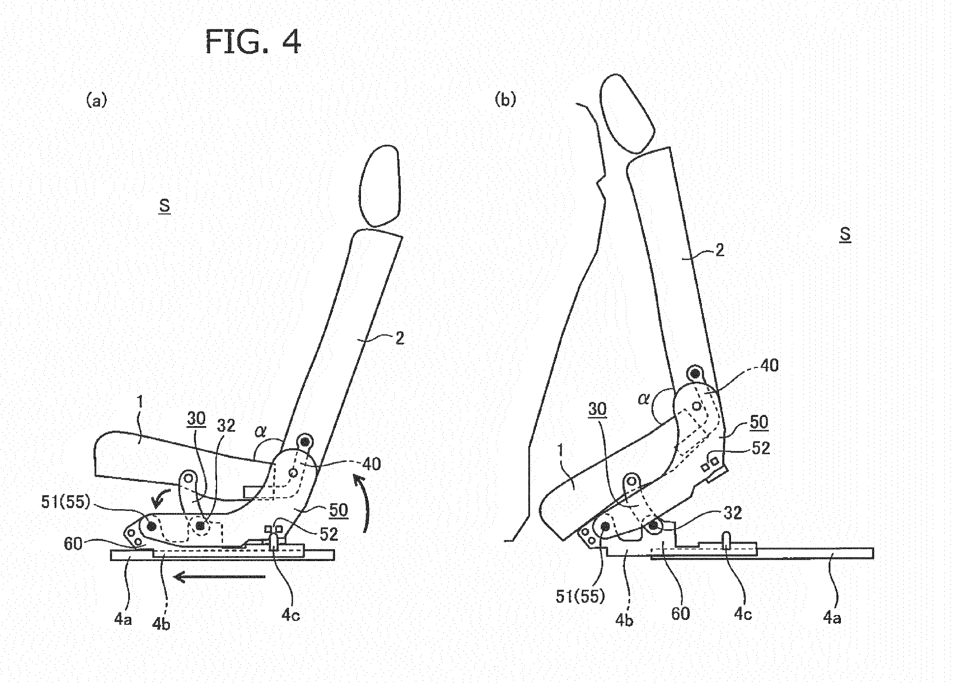

Next, based on FIGS. 4 (a) and 4 (b), actions of moving the vehicle seat S from the seated position to the flip-up position will be described.

When the vehicle seat S is placed at the seated position shown in FIG. 4(a), the base engagement portions 52 and the strikers 4c are in an engagement state, and the upper rails 4b are in an immovably locked state with respect to the lower rails 4a. At the seated position, the seat cushion 1 is supported by the front support links 30, and the seat back 2 is supported by the support bases 50.

When the vehicle seat S is moved from the seated position to the flip-up position, for example, the operation lever (not shown) provided on an upper surface of the seat back 2 is operated.

By the passenger operating the operation lever, the engagement state between the base engagement portions 52 and the strikers 4c is cancelled, and further, the upper rails 4b are switched into a movable lock cancellation state.

It should be noted that between the operation lever and the base engagement portions 52 and the rail devices 4, known cables (not shown) are respectively coupled. By operating the operation lever, the cables are pulled, so that the locked state is respectively cancelled.

After the engagement between the base engagement portions 52 and the strikers 4c is cancelled, the support bases 50 are biased by the spring members 55, and rotated to flip up the seat back 2 and the seat cushion 1 in the forward inclination direction about the base pivot shaft portions 51.

At this time, as shown in FIG. 4(b), the front support links 30 regulate flip-up of the seat cushion 1 and the seat back 2. Thus, the flipped-up seat cushion 1 and the flipped-up seat back 2 are retained at the predetermined forward inclination angle.

It should be noted that the predetermined forward inclination angle is adjustable for example by bias force of the spring members 55.

The front support links 30 are rotated by the bias force of the spring members 55 to move the seat cushion 1 forward about the lower end portions 32 with respect to the rail brackets 60 in conjunction with the rear support links 40.

Therefore, as shown in FIG. 4(b), an angle α made by the seat cushion 1 and the seat back 2 is formed to be larger than an angle α at the seated position.

It should be noted that the magnitude of the angle α is adjustable for example by the bias force of the spring members 55.

Meanwhile, after the upper rails 4b are switched to the movable lock cancellation state, the upper rails 4b are biased by spring members (not shown) and relatively moved to the front side with respect to the lower rails 4a. It should be noted that a relative movement distance of the upper rails 4b is appropriately adjustable.

By the above series of actions, the vehicle seat S is moved to the flip-up position shown in FIG. 4(b).

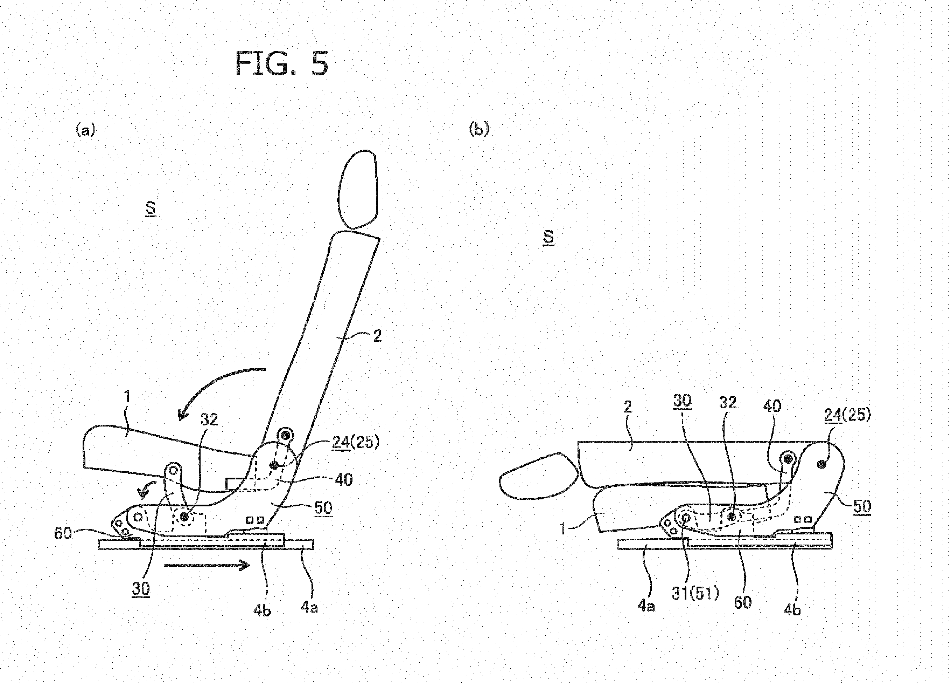

Next, based on FIGS. 5 (a) and 5(b), actions of moving the vehicle seat S from the seated position to the stowed position will be described.

When the vehicle seat S is moved from the seated position shown in FIG. 5(a) to the stowed position, for example, the operation lever (not shown) provided on a left outer side surface of the seat cushion 1 is operated.

By the passenger operating the operation lever, the lock of the reclining devices 24 to retain the seat back 2 in a standing state is cancelled, and further, the upper rails 4b are switched into the movable lock cancellation state.

It should be noted that between the operation lever and the reclining devices 24 and the rail devices 4, known cables (not shown) are respectively coupled. By operating the operation lever, the cables are pulled, so that the locked state is respectively cancelled.

After the lock of the reclining devices 24 is cancelled, the seat back 2 is folded onto the side of the seat cushion 1 about the pivot shafts 25 of the reclining devices 24.

At this time, the front support links 30 and the rear support links 40 are rotated to move the seat cushion 1 downward in the front oblique direction with respect to the vehicle body floor in conjunction with the folding action of the seat back 2. In other words, the front support links 30 are rotated forward about the lower end portions 32 with respect to the rail brackets 60 together with the rear support links 40.

Meanwhile, after the upper rails 4b are switched to the movable lock cancellation state, the upper rails 4b are biased by the spring members (not shown) and relatively moved to the rear side with respect to the lower rails 4a. It should be noted that a relative movement distance of the upper rails 4b is appropriately adjustable.

By the above series of actions, the vehicle seat S is moved to the stowed position shown in FIG. 5(b).

In the above stowing actions, when the front support links 30 are pivoted about the lower end portions 32 with respect to the rail brackets 60, the base pivot shaft portions 51 of the support bases 50 are placed on pivot trajectories of the upper end portions 31 as shown in FIGS. 5(a) and 5(b). That is, when the vehicle seat S is set at the stowed position, the upper end portions 31 of the front support links 30 and the base pivot shaft portions 51 are arranged at overlapping positions when seen from the seat side surface side.

In the above stowing actions, the front support links 30 are rotated forward about the lower end portions 32 with respect to the rail brackets 60, the link coupling member 36 shown in FIG. 2 is rotated to avoid contact with the rail coupling member 65 shown in FIG. 2. After that, at the stowed position, the link coupling member 36 is arranged on the front side of the rail coupling member 65.

In addition to the above embodiment, when the vehicle seat S is set at the flip-up position, the base pivot shaft portions 51 may be arranged on the front side of a gravity center position of the seat main body, and the front support links 30 may be arranged on the rear side of the gravity center position of the seat main body.

With such arrangement, when the front support links 30 support the seat main body flipped up in the forward inclination direction about the base pivot shaft portions 51, the support rigidity of the front support links 30 can be enhanced.

In addition to the above embodiment, when the vehicle seat S is set at the flip-up position, the base pivot shaft portions 51 may be arranged on the front side of a front end portion of the headrest 3 corresponding to the gravity center position of the seat main body, and the upper end portions 31 or the lower end portions 32 of the front support links 30 may be arranged on the rear side of the front end portion of the headrest 3.

With such arrangement, the support rigidity of the front support links 30 with respect to the seat main body is enhanced. Thus, workability to return the seat main body flipped up in the forward inclination direction about the base pivot shaft portions 51 to the seated position is improved.

In addition to the above embodiment, when the vehicle seat S is moved from the seated position to the flip-up position, at least one of the upper end portions 31 and the lower end portions 32 of the front support links 30 may be exposed to an exterior when seen from the seat side surface side.

With such arrangement, an assembling property of the front support links 30 is improved.

In addition to the above embodiment, when the seat back 2 is brought into a standing state in the vertical direction with respect to the vehicle body floor in the middle of movement of the vehicle seat S from the flip-up position to the seated position, the front support links 30 may be arranged on the front side of the gravity center position of the seat main body.

With such arrangement, the support rigidity of the front support links 30 with respect to the seat main body is enhanced. Thus, the workability to return the seat main body to the seated position is improved.

In the above embodiment, the vehicle seat used in an automobile is described as a specific example. However, the present invention is not limited to this but the vehicle seat can be utilized as a seat for a means of transportation such as an airplane and a vessel in addition to a vehicle seat for a train, a bus, and the like.

In the present embodiment, the vehicle seat according to the present invention is mainly described.

However, the above embodiment does not limit the present invention but just provides one example for facilitating understanding of the present invention. The present invention can be modified and improved without departing from the gist thereof, and the present invention includes equivalent items thereof as a matter of course.

In particular, the arrangement and the configurations of the front support links 30, the rear support links 40, the support bases 50, and the rail brackets 60 described in the above embodiment do not limit the present invention but just provide one example.

### Reference Numerals

- S:: Vehicle seat
- 1:: Seat cushion
- 2:: Seat back
2a, 3a: Cushion pad
2b, 3b: Skin
- 3:: Headrest
- 4:: Rail device
4a: Lower rail
4b: Upper rail
4c: Striker
- 10:: Cushion frame
- 11:: Cushion side frame
- 12:: Pan frame
12a: Bent portion
- 20:: Back frame
- 21:: Back side frame
- 22:: Attachment bracket
- 23:: Lower frame
- 24:: Reclining device
- 33:: Link main body portion
- 34:: Flange portion
- 35, 38:: Bead portion
- 36:: Link coupling member
- 37:: Flange portion
- 39:: Flange step portion
- 40:: Rear support link
- 41:: Front end portion
- 42:: Rear end portion
- 50:: Support base
- 51:: Base pivot shaft portion
- 52:: Base engagement portion
- 53:: Center base coupling member
- 54:: Rear base coupling member
- 55:: Spring member
- 60:: Rail bracket
- 61:: Bottom wall portion
- 62:: Outer side wall portion
- 63:: Front wall portion
- 64:: Rear wall portion
- 65:: Rail coupling member
- 66:: Attachment bracket

## Claims

1. A vehicle seat movable from a seated position for a passenger to be seated to a flip-up position for the passenger to get on and off a portion on a rear side of the seat by flipping up a seat back and a seat cushion coupled to the seat back in a forward inclination direction with respect to a vehicle body floor, the vehicle seat comprising:
an attachment member to be attached to the vehicle body floor side;
a support base pivotably coupled to the attachment member, the support base supporting the seat back; and
a support link pivotably coupled to the attachment member, the support link pivotably supporting the seat cushion, wherein
the support base comprises a base pivot shaft portion provided in a front portion of the support base and axially supported on the attachment member in a seat width direction, and is rotatable to move the seat back and the seat cushion to the flip-up position about the base pivot shaft portion with respect to the attachment member, and
the attachment member is arranged between the support base and the support link in the seat width direction.

2. The vehicle seat according to claim 1, wherein
the support base is coupled to an outer side surface of the attachment member in the seat width direction, and
the support link is coupled to an inner side surface of the attachment member.

3. The vehicle seat according to claim 1 or 2, wherein a pair of the support links is provided on a right and left sides of the seat cushion, and respectively inclined downward on the outer sides in the seat width direction.

4. The vehicle seat according to claim 3, comprising:
a link coupling member coupling the pair of the support links, wherein
both right and left end portions of the link coupling member are inclined downward on the outer sides in the seat width direction, and
the inclined portions of the link coupling member and the inclined portions of the support links are coupled to each other.

5. The vehicle seat according to claim 4, wherein a vertically-sectional shape of the link coupling member is a shape elongated in an up and down direction at the seated position.

6. The vehicle seat according to any of claims 1 to 5, wherein the base pivot shaft portion of the support base is sandwiched by the attachment member in the seat width direction.

7. The vehicle seat according to any of claims 1 to 6, comprising:
a rail device comprising a lower rail fixed to the vehicle body floor, and an upper rail supported relatively movably with respect to the lower rail, wherein
the attachment member is a rail bracket attached to an upper surface of the upper rail, and
the upper rail is relatively moved forward with respect to the lower rail in conjunction with pivot of the support base at the time of moving to the flip-up position.

8. The vehicle seat according to any of claims 1 to 7, comprising:
a reclining device pivotably coupling the seat back with respect to the support base, wherein the support link is rotatable to move the seat cushion to a stowed position on the vehicle body floor side about the lower end portion with respect to the attachment member in a state where the seat back is folded onto the side of the seat cushion by the reclining device.

9. The vehicle seat according to claim 7 or 8, wherein
a pair of the rail brackets is provided on a right and left sides of the seat,
the vehicle seat comprises a rail coupling member coupling the pair of the rail brackets, and
the link coupling member is arranged on a front side of the rail coupling member at the stowed position.
